(19) Europäisches Patentamt

**European Patent Office**

**Office européen des brevets**

(11) Veröffentlichungsnummer: **0 287 928 B1**

(12) **EUROPÄISCHE PATENTSCHRIFT**

(45) Veröffentlichungstag der Patentschrift: **11.11.92**

(21) Anmeldenummer: **88105768.1**

(22) Anmeldetag: **12.04.88**

Die Akte enthält technische Angaben, die nach
dem Eingang der Anmeldung eingereicht wurden
und die nicht in dieser Patentschrift enthalten sind.

(51) Int. Cl.⁵: **C08K 3/00**, C08L 31/04,
//(C08L31/04,23:08)

(54) **Flammwidrige, halogenfreie thermoplastische Polymermasse.**

(30) Priorität: **24.04.87 DE 3713671**
**04.02.88 DE 3803269**

(43) Veröffentlichungstag der Anmeldung:
**26.10.88 Patentblatt 88/43**

(45) Bekanntmachung des Hinweises auf die
Patenterteilung:
**11.11.92 Patentblatt 92/46**

(84) Benannte Vertragsstaaten:
**DE ES FR GB IT NL SE**

(56) Entgegenhaltungen:
**EP-A- 0 054 424**
**DE-A- 2 947 332**
**GB-A- 2 119 387**

(73) Patentinhaber: **BAYER AG**

**W-5090 Leverkusen 1 Bayerwerk(DE)**

(72) Erfinder: **Ohm, Christian, Dr.**
**Walter-Flex-Strasse 32**
**W-5090 Leverkusen 1(DE)**
Erfinder: **Pask, Stephen David, Dr.**
**Goethestrasse 57 D**
**W-4047 Dormagen(DE)**
Erfinder: **Wieder, Wolfgang, Dr.**
**Walter-Flex-Strasse 11**
**W-5090 Leverkusen 1(DE)**
Erfinder: **Obrecht, Werner, Dr.**
**Holderbergstrasse 108**
**W-4130 Moers 2(DE)**
Erfinder: **Schabel, Karl-Heinz**
**Unterwietsche 14**
**W-5093 Burscheid 1(DE)**

Rank Xerox (UK) Business Services

**Beschreibung**

Insbesondere für Kabel- und Leitungsummantelungen, aber auch für andere Anwendungen, z.B. als Fußbodenbeläge, werden in zunehmendem Maße halogenfreie, thermoplastisch verarbeitbare Polymerwerkstoffe mit guten mechanischen Eigenschaften gefordert.

Die thermoplastische Verarbeitbarkeit eines Materials ermöglicht eine rationelle Herstellung von Formkörpern durch z.B. Extrusion und die Wiederverwendung von Materialresten und/oder Prozeßabfällen.

Zur Erhöhung ihrer Flammwidrigkeit werden Polymerwerkstoffe mit mineralischen Füllstoffen und/oder halogenhaltigen organischen und anorganischen Substanzen gestreckt oder man verwendet hochhalogenhaltige Polymere, die häufig auch mit Füllstoffen gestreckt werden. Polymerwerkstoffe, die halogenhaltige Zuschläge enthalten, oder deren Polymere selbst halogenhaltig sind, weisen im Brandfall gravierende Schwächen auf, die zu die Höhe des eigentlichen Brandschadens übersteigenden Brandfolgeschäden (gesundheitliche Schäden durch Raucheinwirkung; korrosive Schädigung der Bausubstanz) führen können.

Ein Maßstab für die Flammwidrigkeit von Polymerwerkstoffen ist der LOI (Limiting Oxygen Index), der der Sauerstoffkonzentration entspricht, bei der ein brennender Prüfkörper gerade noch nicht verlöscht. Daraus folgt, daß ein Material mit einem LOI <20 an der Atmosphäre im Brandfall nicht mehr selbst verlöscht (ASTMD-2863).

Die DIN 57 207 und die VDE-Norm 0207 (Teil 24) fordern für halogenfreie Kabelmantelkompounds (unter anderem) neben der Nichtkorrosivität der Brandgase eine Mindestfestigkeit von 6,5 MPa bei einer Bruchdehnung von mindestens 125 %.

Werkstoffe, die diesen Anforderungen genügen, sind bekannt, aber in zunehmendem Maße werden weiter verbesserte Materialien gewünscht, die neben einem LOI über 30 bei guter Festigkeit und eine Bruchdehnung möglichst von 200 % oder darüber aufweisen müssen.

Die DE-OS 2 947 332 beschreibt Polymere, die aus vernetztem Vinylacetat/Alken-Copolymerisat oder einem Gemisch von vernetztem Vinylacetat/Alken-Copolymerisat und weiteren Polymerkomponenten bestehen. Die DE-OS 2 805 930 beschreibt u.a. Gemische aus vernetztem Vinylacetat/Alken-Copolymerisat und Polyolefin, wie z.B. Polypropylen und Polyethylen. In diesen Offenlegungsschriften wird auch eine dynamische Vernetzung beschrieben.

Die dynamische Vernetzung ist ein Vernetzungsverfahren, das z.B. aus US 3 037 954 bekannt ist, wobei es manchmal vorteilhaft sein kann, nur eine partielle Vernetzung durchzuführen (siehe z.B. US 3 862 106). Die geeigneten Mengen an Vernetzungschemikalien und geeignete Parameter für das Vernetzungsverfahren müssen in Abhängigkeit vom verarbeiteten Polymer ermittelt werden.

US 3 399 250 beschreibt ungefüllt partiell vernetzte Polymermischungen aus Polyethylen und Ethylen/Vinylacetat-Copolymerisat. Ähnliche Zubereitungen aus partiell vernetzten Ethylen/Vinylacetat-Copolymerisat und Polypropylen werden in US 4 232 132 beschrieben. Solche Zubereitungen weisen die typischen Vorteile thermoplastischer Kunststoffe auf, die partiell oder vollständig vernetzten Kautschuk enthalten, aber ihr Brandverhalten ist im Sinne der gestellten Aufgabe völlig unzureichend.

Zubereitungen auf Basis von unvernetztem Vinylacetat/Ethylen-Copolymerisat sind auch als flammwidrige, thermoplastische, halogenfreie Formmassen bekannt: DE-OS 3 047 269 und DE-OS 3 306 776 beschreiben Mischungen aus einem kautschukartigen Vinylacetat/Ethylen-Copolymerisat und einem kunststoffartigen (plastomer) Vinylacetat/Ethylen-Copolymerisat. Weiterhin beschreibt DE-OS 3 047 269, daß solche Mischungen aus zwei verschiedenen Vinylacetat/Ethylen-Copolymeren sehr hoch füllbar sind. Erwartungsgemäß (siehe z.B. DE-OS 2 947 332 und DE-OS 3 104 984) ist der LOI solcher hoch gefüllten Polymerzubereitungen umso höher, je höher der Füllstoffanteil ist.

Weiterhin beispielhaft für den Stand der Technik ist die FR-A 8 400 640, die hoch gefüllte thermoplastisch verarbeitbare Mischungen auf Basis von Ethylen/Vinyl-Copolymerisat beschreibt. In dieser Schrift werden die wesentlichen Verbessungen, die durch Anwendung von Füllstoff-Polymer-Kopplungsmitteln zu erzielen sind, beschrieben.

Nach diesem Stand der Technik konnten jedoch keine Materialien, die den strengen Anforderungen der gestellten Aufgabe genügen, hergestellt werden.

Überraschend wurde nun gefunden, daß sich Mischungen aus Ethylen/Vinylacetat-Copolymerisaten, von denen das eine einen niedrigen und das andere einen hohen Vinylacetatgehalt besitzen, besonders gut als Polymerbasis für flammwidrige, halogenfreie, thermoplastisch verarbeitbare Zubereitungen eignen, sofern die Copolymerisate dynamisch vernetzt worden sind.

Gegenstand der Erfindung sind also halogenfreie, thermoplatisch verarbeitbare Zusammensetzungen aus

I. 20 bis 50, vorzugsweise 30 bis 50, Gew.-Teilen eines Ethylen/Vinylacetat-Copolymeren mit einem Gehalt an Vinylacetateinheiten von 5 bis 15 Gew.-%, vorzugsweise von 5 bis 10 Gew.-%,

II. 80 bis 50, vorzugsweise 70 bis 50 Gew.-Teilen eines Ethylen/Vinylacetat-Copolymeren mit einem Gehalt an Vinylacetateinheiten von 42 bis 75 Gew.-%, vorzugsweise von 60 bis 70 Gew.-%,
III. 150 bis 220, vorzugsweise 160 bis 200 Gew.-Teilen mineralischem Füllstoff pro 100 Gew.-Teile I + II und

gegebenenfalls Verarbeitungshilfsmitteln und/oder sonstigen Zusätzen,

wobei die Copolymeren unter Einwirkung einer Scherrate von mehr als 100 s$^{-1}$ bei einer Temperatur oberhalb der Erweichungstemperatur des höherschmelzenden Copolymeren mit einem Peroxid, welches nicht oder nur sehr zögernd unterhalb 125°C zerfällt, für ein Zeit, welche mindestens das 4-fache der Halbwertzeit des verwendeten Peroxids (bei der Temperatur der dynamischen Vernetzung) beträgt, dynamisch vernetzt worden sind.

Die bevorzugten Ethylen/Vinylacetat-Copolymeren mit einem Gehalt von 5 bis 15 Gew.-% Vinylacetat-Einheiten haben Schmelzindices (190/2,16 Kp nach DIN 53 735) von 0,15 bis 1,8 g/10 Minuten` Polymere, die Schmelzindices zwischen 1,3 und 1,8 g/10 Minuten aufweisen, sind besonders geeignet. Solche Polymere sind teilkristallin und ihre Vicat-Erweichungstemperaturen (VST A, nach DIN 53 460) liegen zwischen 75 und 95°C. Besonders vorteilhaft sind Polymere, die Vicat-Erweichungstemperaturen zwischen 75 und 85°C aufweisen.

Die bevorzugten Ethylen/Vinylacetat-Copolymeren mit einem Gehalt von 42 bis 70 Gew.-% Vinylacetat-Einheiten sind im wesentlichen lineare Polymere ohne oder mit geringen kristallinen Bereichen. Sie weisen Mooney-Viskositäten (ML-4 (100°C) nach DIN 53 523) zwischen 15 und 40 ME auf. Besonders gut geeignet sind Polymere mit Mooney Viskositäten (ML-4 (100°C)) zwischen 20 und 30 ME. Ethylen/Vinylacetat-Copolymere können durch radikalinitiierte Polymerisation von Ethylen und Vinylacetat bei Hochdruck oder in Lösung bei Mitteldruck hergestellt werden.

Obwohl einfache Copolymere aus Ethylen und Vinylacetat besonders bevorzugte Einsatzmaterialien darstellen, können auch Terpolymere mit bis zu 5 Gew.-% copolymerisierter Termonomereinheiten, wie z.B. Acrylsäure-, Methacrylsäure- oder Maleinsäureeinheiten, vorteilhaft im Sinne de Erfindung eingesetzt werden.

In der weiteren Beschreibung der erfindungsgemäßen Zubereitungen werden die Gewichtsteile (Gew.-Teile) der Komponenten jeweils auf 100 Gew.-Teile Polymer bezogen.

Um die geforderten Eigenschaften zu erreichen und eine thermoplastische Verarbeitbarkeit (wie. z:B: Extrudierbarkeit) zu gewährleisten, ist es unerläßlich, die Zubereitungen dynamisch zu vernetzen. Unter "dynamischer Vernetzung" im Sinne der Erfindung versteht man ein Verfahren, wonach die Polymermischung in Gegenwart von Vernetzer und gegebenenfalls Covernetzer mastiziert wird, während die Vernetzung erfolgt. Der Begriff "dynamisch" drückt aus, daß die Mischung während der Vernetzung Scherkräften ausgesetzt wird, während bei der "statischen" Vernetzung ohne Einwirkung von Scherkräften vernetzt wird.

Die Scherrate (d.h. im Falle eines Extruders der Quotient aus [von der Schneckenwelle beschriebenem größtem Kreisumfang mal Umdrehungen der Schnecke pro sec.] und Schneckentoleranz (= Abstand zwischen Schnecke und Wand der Schneckenkammer), also Umfangsgeschwindigkeit der Schnecke durch Schneckentoleranz) beträgt über 100 sec$^{-1}$, vorzugsweise über 1000 sec$^{-1}$, insbesondere 2000 bis 7000 sec$^{-1}$. Nach oben hin wird die Scherrate lediglich durch das Risiko einer thermischen Schädigung der Polymeren begrenzt.

Die dynamische Vernetzung erfolgt bei einer Temperatur oberhalb der Erweichungstemperatur des höher schmelzenden Copolymeren, vorzugsweise 20 bis 50°C über dieser Erweichungstemperatur (bestimmt durch Differentialthermoanalyse).

Für die dynamische Vernetzung ist mindestens eine Verweilzeit in der dynamischen Zone vorzusehen, die das 4-fache der Halbwertzeit des verwendeten Peroxids (bei der temperatur der dynamischen Vernetzung) beträgt.

Geeignete Aggregate sind Kneter, wie z.B. Banburymischer, Brabendermischer, oder Mischextruder, wie z.B. Ein- und Zweischneckenmaschinen.

Unter den Peroxiden sind z.B. Dicumylperoxid, 2,5-Bis-(t-butylperoxid-2,5-dimethylhexan) und 4,4'-Bis-(t-butylperoxy)-diisopropylbenzol besonders bevorzugt. Hierbei ist wichtig, daß das angewendete Peroxid nicht oder nur sehr zögernd unterhalb 125°C zerfällt. Besonders geeignet sind solcher Peroxide die eine Zerfallshalbwertzeit von 1 Minute bei einer Temperatur zwischen 130 und 190°C aufweisen.

Unter "Covernetzern" oder "Co-Härtungsmitteln" sind mehrfunktionelle organische und organometallische Verbindungen zu verstehen, die allein keine oder nur eine nicht ausreichende Vernetzung der Polymeren hervorrufen. Beispiele für solche Verbindungen sind Triallylcyanurat, Triallylisocyanurat, Pentaerythrittetramethacrylat und N,N'-m-Phenylendimaleimid, wobei letzteres besonders bevorzugt wird.

Die dynamische Vernetzung kann in An- oder Abwesenheit des Füllstoffs durchgeführt werden. Zur Erzielung vergleichbarer mechanischer Eigenschaften müssen zur dynamischen Vernetzung füllstoffhaltiger Mischungen jedoch größere Mengen an Vernetzungschemikalien eingesetzt werden.

Ungefüllte Mischungen werden im Anschluß an die dynamische Vernetzung gefüllt.

Zur dynamischen Vernetzung werden vorzugsweise nicht mehr als

$$\left[ 0,25 + \frac{\text{Gew.-Tle. Füllstoff}^*}{2.000} \right] \text{Gew.-Teile Peroxid oder}$$

$$\left[ 0,8 + \frac{\text{Gew.-Tle. Füllstoff}^*}{500} \right] \text{Gew.-Teile Peroxid und Covernetzer}$$

angewendet, wobei "Füllstoff*" den Füllstoff III bedeutet, der während der dynamischen Vernetzung anwesend ist.

Jedenfalls werden wesentlich weniger Vernetzungschemikalien eingesetzt (etwa 1/3), als für eine vollständige statische Vulkanisation, d.h. bei einer Vulkanisation während der das Material keiner Scherung unterworfen wird, verwendet werden müßten.

Besonders bevorzugte Füllstoffe sind solche, die beim Erhitzen Wasser abgeben, wie z.B. Aluminiumhydroxid oder hydratisiertes Aluminiumoxid der Formel $Al_2O_3 \cdot xH_2O$, wobei x im Bereich von 0,5 bis 3,0 liegt, speziell $Al_2O_3 \cdot 3H_2O$, hydratisiertes Magnesiumoxid oder Magnesiumhydroxid und hydratisiertes Calciumsilikat. Gemische, die zu mehr als 50 Gew.-% (bezogen auf den Gesamtfüllstoff) der obigen Füllstoffe enthalten, können zusammen mit anderen Füllstoffen, wie z.B. Ruß und/oder Siliciumdioxid in den erfindungsgemäßen Zubereitungen vorteilhaft verwendet werden. Weitere Beispiele wie Mischungen aus den obigen Hydroxiden mit weniger als 50 Gew.-% Magnesiumcarbonat und/oder Kreide und/oder Zinkborat haben sich als besonders geeignet erwiesen. Besonders bevorzugt Füllstoffe sind solche, worin weniger als 10 Gew.-% der Teilchen einen Durchmesser von mehr als 3 μm und mindestens 50 Gew.-% der Teilchen einen Durchmesser kleiner als 2 μm haben.

Gegebenenfalls kann der Füllstoff chemisch behandelt werden, um seine Verträglichkeit mit dem Polymermaterial zu verbessern bzw. eine gewisse Ankopplung an eines der Polymere oder beide zu bewirken. Beispiele für chemische Verträglichmacher sind z.B. Stearate oder Stearinsäure. Als Kopplungsmittel können z.B. Silane wie Dimethyldichlorsilan, Methyltrichlorsilan, Vinyltrichlorsilan, Methacryloxypropyl-trimethoxysilan und Vinyltrimethoxysilan verwendet werden. Weitere Beispiele für Kopplungsmittel sind in der DE-OS 2 947 332 und in der dort zitierten Literatur beschrieben. Oberflächenbehandlungsmittel werden üblicherweise in einem Gewichtsverhältnis (bezogen auf den Füllstoff) von (1 bis 100):1.000, vorzugsweise von (5 bis 50):1.000, verwendet.

Entsprechend einer besonderen Ausführungsform enthalten die erfindungsgemäßen Zubereitungen 0,1 bis 20 Gew.-Teile verseiftes Ethylen/Vinylacetat-Copolymerisat mit einem Verseifungsgrad von 70 bis 100, vorzugsweise von 85 bis 99 % pro 100 Gew.-Teile I + II. Bevorzugte verseifte Ethylen/Vinylacetat-Copolymerisate sind solche aus Ethylen/Vinylacetat-Copolymerisaten mit einem Gehalt an Vinylacetateinheiten von 10 bis 50, vorzugsweise von 20 bis 40 Gew.-%. Derartige Polymerisate sind, z.B. aus der DE-OS 2 943 469, bekannt. Der Zusatz erhöht die Festigkeit, ohne die Dehnfähigkeit oder den LOI gravierend zu verschlechtern.

Das verseifte Ethylen/Vinylacetat-Copolymerisat kann vor, während oder nach der dynamischen Vernetzung der Copolymeren I und II zugemischt werden.

Die erfindungsgemäßen Zubereitungen können bis zu maximal 20 Gew.-Teile üblicher Antioxidantien, Intumeszenz-, Flammschutz- und sonstige Verarbeitungshilfsmittel enthalten. Hierbei sind vorzugsweise nur halogenfreie Komponenten zu verwenden. Zur Gruppe der üblichen Verarbeitungshilfsmittel gehören Weichmacher wie Öle, Fette und Wachse, sofern diese halogenfrei sind. Zur Gruppe der üblichen Alterungsschutzmittel gehören beispielsweise sterisch gehinderte Phenole, Phenylnaphthyl-amine, substituierte Diphenyl-amine, p-Phenylen-diamine, Keton Amin-Kondensate, substituierte Phenole, Thiobisphenole, Mercaptoverbindungen, Imidazole, Benzimidazole, Mercaptobenzimidazole, Phenolkondensationsprodukte, Phenolester, Polyether, schwermetall-organische Verbindungen, Urethanverbindungen, Si-organische Verbindungen, polymere Amine, Polyarylalkane, Nitrile, Benzotriazole, Phosphorsäureamide, Amine und Molekularsiebe, Carbonsäurederivate, aromatische Dihydroxy-polycarbonate, Ester der Phosporsäure, Dihydrochinolinderivate. Bei der Wahl der Hilfsmittel ist zu berücksichtigen, daß organische bzw. brennbare Verarbeitungshilfsmittel den LOI-Wert der Zubereitung erniedrigen können. Komponenten, die einen Halogengehalt

4

der Zubereitung von weniger als 2 Gew.-% erzeugen, sind in Ausnahmefällen ebenfalls einsetzbar.

Die erfindungsgemäßen Zubereitungen können in einem Innenmischer zu Produkten verarbeitet werden, die, wenn sie bei Temperaturen von 150 bis 200°C auf eine Kautschukwalze übertragen werden, kontinuierliche Felle bilden. Die Bildung eines kontinuierlichen Fells bzw. eines Fells mit einer glatten Oberfläche hat sich als guter Schnelltest für die thermoplastische Verarbeitbarkeit der Produkte erwiesen. Die erfindungsgemäßen Zubereitungen können in einem einstufigen Verfahren hergestellt werden, wobei der Füllstoff während des dynamischen Vernetzens mit dem Polymeren schon vermicht worden ist oder wird, oder es ist möglich, erst das thermoplastische Polymergemisch (gegebenenfalls mit Hilfsmitteln) herzustellen und dies, nach dem es vernetzt worden ist, in einem zweiten Prozeßschritt mit dem Füllstoff innig zu vermischen. Diese Variante der Herstellung wird bevorzugt wenn ein kontinuierliches Aggregat, wie ein Zweiwellen-Extruder oder ein Co-Kneter, angewendet wird.

Die erfindungsgemäßen Zubereitungen finden überall dort Anwendung, wo in Form von Platten, Bahnen oder Schläuchen ein Polymer von ausgezeichneter Flammwidrigkeit und guten mechanischen Eigenschaften gefordert wird.

Besonders geeignet sind die erfindungsgemäßen Zubereitungen zur Herstellung von Kabelummantelungen.

Die folgenden Beispiele dienen der näheren Erläuterung der Erfindung.

Beispiele

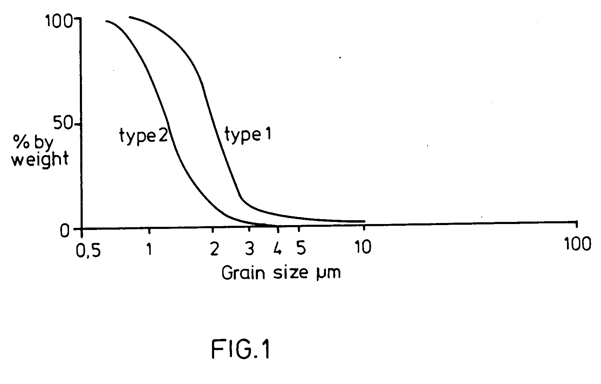

Die Polymeren, die in den Beispielen Anwendung finden, sind in Tabelle 1 spezifiziert. Die Korngrößenverteilung der zwei Typen Aluminiumhydroxid sind in Abb. 1 wiedergegeben. ®VULKANOX HS ist die Handelsbezeichnung eines Polymer-Antioxidationsmittels auf Basis 2,2,4-Trimethyl-1,2-dihydrochinolin. ®IRGAFOS TNPP ist die Handeslbezeichnung für Trinonylphenylphosphit und ®PERKADOX 14/40 ist die Handelsbezeichnung für ein Granulat, das 40 Gew.-% Bis-(t-butylperoxy-isopropyl)-benzol enthält. TAC ist Triallylcyanurat und NPD ist N,N′-m-Phenylendimaleimid, beide sind Co-Härtungsreagenzien. ®CORAX N 550 ist ein Ruß.

Die mechanischen Eigenschaften der Proben wurden gemäß DIN 53 515 (Weiterreißfestigkeit) und DIN 53 504 (Zugversuch) geprüft. Der LOI wurde gemäß ASTM D-2863 gemessen. Die Probekörper wurden aus Preßplatten, die bei 190°C und 300 bar für 5 Minuten gepreßt wurden, gestanzt. Bevor sie der Form entnommen wurden, wurden die Platten unter diesem Druck auf Raumtemperatur abgekühlt.

Die Proben (Tabelle 2) wurden in einem 1 l Laborkneter bei einer Wellentemperatur von 60°C und bei 60 UpM hergestellt. Die Mischfolge für Proben 1 und 2 war:

| Zeit[min] | Maßnahme |
|---|---|
| 0-3 | Zugabe der 1. Hälfte Aluminiumhydroxid, Polymere, ®VULKANOX HS und Ruß |
| 3 | Zugabe der 2. Hälfte Aluminiumhydroxid |
| 5 | Fegen. |
| 7 | Auswurf. |

Für die Proben 3 und 4 war die Mischfolge ähnlich, aber bei 5′ wurde das ®PERKADOX 14/40 zugegeben, und die Mischzeit betrug 9 Minuten. Für Proben 5 und 6 war die Mischfolge:

| Zeit [min] | Maßnahme |
|---|---|
| 0-1,5 | Zugabe von Polymer III bzw. V und der 1. Hälfte Aluminiumhydroxid |
| 1,5 | Zugabe von Polymer II |
| 3 | Zugabe der 2. Hälfte Aluminiumhydroxid, ®VULKANOX HS und Ruß |
| 4,5 | Fegen |
| 5 | Auswurf |

Die Proben 7 und 8 wurden nach der gleichen Mischfolge wie die Proben 5 und 6 hergestellt, mit der Ausnahme, daß bei 3′ das ®PERKADOX zugegeben wurde und die Gesamtmischzeit etwa 10 Minuten betrug. Probe 8 ist eine erfindungsgemäße Mischung. Proben 1 - 4 zeigen, daß bei 100 Gew.-Teilen Füllstoff weder durch Erhöhung des Vinylacetatgehalts der Ethylen Vinylacetat-Copolymeren von 40 Gew.-% auf 70 Gew.-% (Polymere III; V) noch durch die dynamische Vernetzung eine deutliche Erhöhung des LOI erreicht werden kann. Ein Vergleich der Proben 5 -8 zeigt jedoch, daß beim Einsatz von 200 Gew.-Teilen Füllstoff überraschende Effekte eintreten. Neben der Tatsache, daß bei dieser hohen Füllstoffdosierung eine überproportionale LOI-Verbesserung erfolgt, wenn man den Vinylacetatgehalt der Ethylen Vinylacetat-Copolymeren von 40 Gew.-% auf 70 Gew.-% (Polymere IV; V) erhöht, ergibt auch die dynamische Vernetzung eine zusätliche LOI-Erhöhung.

Zusätzlich ist die Verbesserung der Zugfestigkeit mittels dynamischer Vernetzung etwa doppelt so groß wie mit nur 100 Gew.-Teilen Füllstoff.

Die Proben (Tabelle 3) wurden in einem 1,3 l Laborkneter bei einer Wellentemperatur von 100°C und einer Drehzahl von 100 UpM hergestellt. Proben 14 und 15 sind die Polymerbasis für die erfindungsgemäße Zubereitung. Proben 9 bis 11 waren nach dem Knetzyklus pulvrig und konnten nicht zu einem kontinuierlichen Fell auf der Walze (T = 150°C) verarbeitet werden. Der Mischzyklus für diese Proben war:

| Zeit [min] | Maßnahme |
|---|---|
| 0-1 | Zugabe der Polymeren, ®VULKANOX HS, Magnesiumoxid |
| ca. 3 | (Schreibertemperatur 160°C) Zugabe ®PERKADOX 14/40 |
| ca. 8 | (Schreibertemperatur 180°C) Zugabe ®IRGAFOS TNPP |
| 10 | Auswurf (Schreibertemperatur 200°C) |

Die Proben 12 bis 15 wurden nach der gleichen Mischfolgen wie die Proben 9 bis 11 hergestellt, mit der Ausnahme, daß das ®PERKADOX 14/40 schon während der ersten Minute zugegeben wurde.

Ein Vergleich zwischen den Proben 12 und 13 oder 14 und 15 zeigt eine unerwartet große Verbesserung der mechanischen Eigenschaften der Polymerbasis der erfindungsgemäßen Mischungen, wenn man statt Homo-Polyethylen ein Ethylen/Vinylacetat-Copolymer einsetzt.

In Tabelle 4 sind die mechanischen Eigenschaften der Proben 13 und 14 wiedergegeben, nachdem diese mit unterschiedlichen Mengen Füllstoff (Typ 1) an einer Mischwalze (T = 150°C) während 15 Minuten innig gemischt wurden.

Diese Beispiele zeigen, daß mit einem Ethylen/Vinylacetat-Copolymer statt eines Polyethylen-Homopolymers (vgl. Proben 13, 16 und 17 mit 15, 20 und 21) nicht nur die mechanischen Eigenschaften der Polymerbasismischung deutlich besser sind, sondern auch eine bessere Füllbarkeit vorhanden ist, denn die Verschlechterung der mechanischen Eigenschaften bei höherer Füllung ist deutlich schwächer. Obwohl Beispiele 18 und 19 erfindungsgemäße Zubereitungen darstellen, zeigt ein Vergleich mit den Proben 20 und 21 die Vorteile der besonders bevorzugten Ausführungsformen der Erfindung.

<u>**Tabelle 1**</u>

| Typ | Ethylen:Vi-nylacetat-Verhältnis im Copolymer [Gew.-%] | MFI*) [g/10 Min] | Dichte bei 23°C DIN53479 [kg/l] | Mooney-V. bei 100°C M1-4 [ME] | Vicat-Erw.**) [°C] |
|-----|---------------------------------------------------------|------------------|----------------------------------|-------------------------------|---------------------|
| I   | 100: 0  | 0,25 | 0,928 | -     | 108 |
| II  | 90:10   | 1,5  | 0,928 | -     | 79  |
| III | 60:40   | 2-5  | 0,970 | 16-24 | -   |
| IV  | 55:45   | 2-5  | 0,980 | 16-30 | -   |
| V   | 30:70   | 2-6  | 1,06  | 16-24 | -   |

*) Schmelzindex 190°C/2,16 Kp, bestimmt wie in DIN 53 735 beschrieben

**) Erweichungstemperatur nach Vicat; VST A, DIN 53460

Tabelle 2

| Probe Nr. | Vergleich | | | | | | | |
|-----------|-----|-----|-----|-----|-----|-----|-----|-----|
|           | 1   | 2   | 3   | 4   | 5   | 6   | 7   | 8   |
| Polymer II | 35 | 35 | 35 | 35 | 35 | 35 | 35 | 35 |
| Polymer III | 65 | - | 65 | - | 65 | - | 65 | - |
| Polymer V | - | 65 | - | 65 | - | 65 | - | 65 |
| Füllstoff (Typ2) | 100 | 100 | 100 | 100 | 200 | 200 | 200 | 200 |
| ®VULKANOX HS | 1,0 | 1,0 | 1,0 | 1,0 | 1,0 | 1,0 | 1,0 | 1,0 |
| ®PERKADOX 14/40 | - | - | 0,5 | 0,5 | - | - | 0,5 | 0,5 |
| ®CORAX N550 | 2,5 | 2,5 | 2,5 | 2,5 | 2,5 | 2,5 | 2,5 | 2,5 |
| Batchtemperatur*[°C] | 132 | 153 | 183 | 184 | 160 | 166 | 215 | 213 |
| Zugfestigkeit [MPa] | 5,0 | 3,7 | 6,4 | 6,3 | 6,4 | 5,4 | 8,1 | 8,0 |
| Weiterreißfestigkeit [N/mm] | 25,6 | 15,6 | 25,3 | 14,0 | 20,1 | 19,0 | 12,3 | 6,2 |
| Bruchdehnung [%] | 740 | 895 | 660 | 600 | 225 | 500 | 215 | 230 |
| LOI | 28 | 31 | 29 | 31 | 48 | 59 | 45 | 71 |

*gestochen

Tabelle 3

| Probe Nr. | Vergleich | | | | | | |
|---|---|---|---|---|---|---|---|
| | 9 | 10 | 11 | 12 | 13 | 14 | 15 |
| Polymer I | 40 | 40 | 40 | 40 | 40 | - | - |
| Polymer II | - | - | - | - | - | 40 | 40 |
| Polymer IV | 60 | 60 | 60 | 60 | - | 60 | - |
| Polymer V | - | - | - | - | 60 | - | 60 |
| ®VULKANOX HS | 0,5 | 0,5 | 0,5 | 0,5 | 0,5 | 0,5 | 0,5 |
| ®PERKADOX 14/40 | 1,875 | 0,75 | 1,5 | 0,25 | 0,25 | 0,25 | 0,25 |
| NPD | 0,9 | 0,9 | - | 0,3 | 0,3 | 0,3 | 0,3 |
| TAC | - | - | 0,9 | - | - | - | - |
| Magnesiumoxid | 0,9 | 0,9 | 0,9 | 0,9 | 0,9 | 0,9 | 0,9 |
| ®IRGAFOS TNPP | 0,5 | 0,5 | 0,5 | 0,5 | 0,5 | 0,5 | 0,5 |
| Zugfestigkeit [MPa] | *** | *** | *** | 5,6 | 2,1 | 8,0 | 5,1 |
| Bruchdehnung [%] | *** | *** | *** | 425 | 545 | 525 | 480 |

*** Material nicht thermoplastisch verarbeitbar.

Tabelle 4

Probe Nr.

| | Vergleich | | | | | | | Ver-gleich | |
| --- | --- | --- | --- | --- | --- | --- | --- | --- | --- |
| | 13 | 16 | 17 | 14 | 18 | 19 | 15 | 20 | 21 |
| Polymerbasis | s.o. | wie 13 | wie 13 | s.o. | wie 14 | wie 14 | s.o. | wie 15 | wie 15 |
| Füllstoff (Typ 1) | - | 100 | 160 | - | 100 | 160 | - | 100 | 160 |
| Zugfestigkeit [MPa] | 2,1 | 5,8 | 7,3 | 8,0 | 5,8 | 6,2 | 5,1 | 6,1 | 6,7 |
| Bruchdehnung [%] | 545 | 419 | 203 | 525 | 260 | 199 | 480 | 380 | 323 |
| LOI | - | 29 | 48 | - | 30 | 41 | - | 30 | 50 |

EP 0 287 928 B1

Abb. 1

Tabelle 5

| Probe Nr. | 22 | 23 | 24 | 25 |
|---|---|---|---|---|
| Polymer V | 70 | 70 | 70 | 70 |
| Polymer II | 30 | 30 | 30 | 30 |
| Füllstoff (Typ 2) | 150 | 150 | 150 | 150 |
| ®Vulkanox HS | 0,5 | 0,5 | 0,5 | 0,5 |
| ®Irgafos TNPP | 0,5 | 0,5 | 0,5 | 0,5 |
| MgO | 0,9 | 0,9 | 0,9 | 0,9 |
| ®Perkadox 14/40 | 0,5 | 0,5 | 0,5 | 0,5 |
| Verseiftes EVA* | - | 5 | 10 | 20 |
| Zugfestigkeit [MPa] | 6,0 | 7,1 | 8,0 | 8,3 |
| Bruchdehnung [%] | 280 | 205 | 210 | 190 |
| LOI | 38 | 37 | 35 | 33 |

* Das verseifte Ethylen/Vinylacetat-Copolymer hatte einen Verseifungsgrad von > 95 % und wurde aus einem Copolymer mit 30 Gew.-% Vinylacetateinheiten hergestellt.

Patentansprüche

10

1. Halogenfreie, thermoplastisch verarbeitbare Zusammensetzungen aus

I. 20 bis 50 Gew.-Teilen eines Ethylen/Vinylacetat-Copolymeren mit einem Gehalt an Vinylacetateinheiten von 5 bis 15 Gew.-%,

II. 80 bis 50 Gew.-Teilen eines Ethylen/Vinylacetat-Copolymeren mit einem Gehalt an Vinylacetateinheiten von 42 bis 75 Gew.-%,

III. 150 bis 220 Gew.-Teilen mineralischem Füllstoff pro 100 Gew.-Teile I + II und

gegebenenfalls Verarbeitungshilfsmitteln und/oder sonstigen Zusätzen,

wobei die Copolymeren unter Einwirkung einer Scherrate von mehr als $100 \ s^{-1}$ bei einer Temperatur oberhalb der Erweichungstemperatur des höherschmelzenden Copolymeren mit einem Peroxid, welches nicht oder nur sehr zögernd unterhalb 125 °C zerfällt, sowie gegebenenfalls einem Covernetzer für eine Zeit, welche mindestens das 4-fache der Halbwertzeit des verwendeten Peroxids (bei der Temperatur der dynamischen Vernetzung) beträgt, dynamisch vernetzt worden sind.

2. Zusammensetzungen nach Anspruch 1, wobei die dynamische Vernetzung in Gegenwart des Füllstoffs III erfolgt ist.

3. Zusammensetzungen nach Ansprüchen 1 und 2, wobei die dynamische Vernetzung in Gegenwart von

$$(0,1 \text{ bis } 1) \left[ 0,25 + \frac{\text{Gew.-Teile Füllstoff}^*}{2000} \right] \text{ Gew.-Teilen}$$

Peroxid oder

$$(0,1 \text{ bis } 1) \left[ 0,8 + \frac{\text{Gew.-Teile Füllstoff}^*}{500} \right] \text{ Gew.-Teilen}$$

(Peroxid + Covernetzer) erfolgt ist und "Füllstoff*" die Menge Füllstoff III bedeutet, die während der dynamischen Vernetzung anwesend ist.

4. Zusammensetzungen nach Ansprüchen 1-3, wobei der Füllstoff III auf der Reihe Aluminiumhydroxid, hydratisiertes Aluminiumoxid, Magnesiumhydroxid, hydratisiertes Magnesiumoxid, hydratisiertes Calcumsilicat ausgewählt ist.

5. Zusammensetzungen nach Ansprüchen 1-4, die als sonstigen Zusatz 0,1 bis 20 Gew.-Teile verseiftes Ethylen/Vinylacetat-Copolymerisat pro 100 Gew.-Teile I + II enthalten.

6. Verfahren zur Herstellung der Zusammensetzungen nach Ansprüchen 1-5, wonach man die Komponenten in An- oder Abwesenheit des Füllstoffs III dynamisch vernetzt und gegebenenfalls - falls nicht vor der Vernetzung geschehen - den Füllstoff III danach zumischt.

7. Verwendung der Zusammensetzung nach Ansprüchen 1-5 zur Herstellung von Formkörpern.

8. Verwendung der Zusammensetzungen nach Ansprüchen 1-5 als Kabelummantelungsmaterial.

## Claims

1. Halogen-free thermoplastically processable compositions of

I. 20 to 50 parts by weight of an ethylene/vinyl acetate copolymer containing 5 to 15% by weight vinyl acetate units,

II. 80 to 50 parts by weight of an ethylene/vinyl acetate copolymer containing 42 to 75% by weight vinyl acetate units,

III. 150 to 220 parts by weight mineral filler per 100 parts by weight I + II

and, optionally, processing aids and/or other additives,

the copolymers having been dynamically crosslinked with a peroxide, which only decomposes very

EP 0 287 928 B1

slowly, if at all, below 125°C, and optionally a co-crosslinking agent at a shear rate of more than 100 $s^{-1}$ and at a temperature above the softening temperature of the higher melting copolymer for a time corresponding to at least four times the half life period of the peroxide used (at the dynamic crosslinking temperature).

2. Compositions as claimed in claim 1, the dynamic crosslinking being carried out in the presence of the filler III.

3. Compositions as claimed in claims 1 and 2, the dynamic crosslinking being carried out in the presence of

$$(0.1 \text{ to } 1) \left[ 0.25 + \frac{\text{parts by weight filler*}}{2000} \right] \text{ parts by weight}$$

peroxide or

$$(0.1 \text{ to } 1) \left[ 0.8 + \frac{\text{parts by weight filler*}}{500} \right] \text{ parts by weight}$$

(peroxide + co-crosslinker) and "filler*" signifying the quantity of filler III which is present during the dynamic crosslinking.

4. Compositions as claimed in claims 1 to 3, the filler III being selected from the group consisting of aluminium hydroxide, hydrated aluminium oxide, magnesium hydroxide, hydrated magnesium oxide, hydrated calcium silicate.

5. Compositions as claimed in claims 1 to 4 containing 0.1 to 20 parts by weight hydrolyzed ethylene/vinyl acetate copolymer per 100 parts by weight I + II as a further additive.

6. A process for the production of the compositions claimed in claims 1 to 5, in which the components are dynamically crosslinked in the presence or absence of filler III and - unless it was added before crosslinking - filler III is subsequently added.

7. The use of the compositions claimed in claims 1 to 5 for the production of mouldings.

8. The use of the compositions claimed in claims 1 to 5 as a cable sheathing material.

**Revendications**

1. Compositions exemptes d'halogène apte aux transformations themoplastiques, de :
   I. 20 à 50 parties en poids d'un copolymère éthylène/acétate de vinyle d'une teneur en motifs d'acétate de vinyle de 5 à 10 % en poids;
   II. 80 à 50 parties en poids d'un copolymère éthylène/acétate de vinyle d'une teneur en motifs d'acétate de vinyle de 42 à 75 % en poids;
   III. 150 à 220 parties en poids de matière de charge minérale pour 100 parties en poids de I + II et éventuellement des agents auxiliaires de transformation et/ou d'autres additifs,
   dans lesquelles les copolymères ont été soumis à la réticulation dynamique sous l'action d'un taux de cisaillement de plus de 100 $s^{-1}$ à une température supérieure à la température de ramollissement du copolymère fondant le plus haut avec un peroxyde qui ne se décompose pas au-dessous de 125°C ou seulement très lentement, ainsi éventuellement qu'un coréticulant, pendant une durée qui est d'au moins quatre fois la durée de demi-vie du peroxyde utilisé (à la température de la réticulation

12

dynamique.

2. Compositions selon la revendication 1, dans lesquelles la réticulation dynamique s'effectue en présence de la charge III.

3. Compositions selon les revendications 1 et 2, dans lesquelles la réticulation dynamique s'effectue en présence de :

$$(0,1 \text{ à } 1) \left[ 0,25 + \frac{\text{parties en poids de charge*}}{2\,000} \right] \text{ parties en poids de peroxyde ou}$$

$$(0,1 \text{ à } 1) \left[ 0,8 + \frac{\text{parties en poids de charge*}}{500} \right] \text{ parties en poids de peroxyde et de coréticulant,}$$

et "charge" désigne la quantité de la matière de charge III qui est présente pendant la réticulation dynamique.

4. Compositions selon les revendications 1-3, dans lesquelles la charge III est choisie parmi l'hydroxy de d'aluminium, l'oxyde d'aluminium hydraté, l'hydroxyde de magnésium, l'oxyde de magnésium hydraté et le silicate de calcium hydraté.

5. Compositions selon les revendications 1-4, qui contiennent comme additif 0,1 à 20 parties en poids de copolymère éthylène/acétate de vinyle saponifié pour 100 parties en poids de I + II.

6. Procédé pour la fabrication des compositions selon les revendications 1-5, selon lequel on soumet les constituants à la réticulation dynamique en présence ou en l'absence de la charge III et éventuellement - si ce n'est fait avant la réticulation - on incorpore ensuite la charge III.

7. Utilisation des compositions selon les revendications 1-5 pour la fabrication de pièces moulées.

8. Utilisation des compositions selon les revendications 1-5 comme matériau de gainage de câbles.

FIG.1